# EUROPÄISCHE PATENTSCHRIFT

(11) **EP 1 247 785 B1**
(45) Veröffentlichungstag und Bekanntmachung des Hinweises auf die Patenterteilung: **11.05.2011**
(21) Anmeldenummer: 02007036.3
(22) Anmeldetag: 27.03.2002
(51) Int. Cl.: C04B 35/05

(54) **Resistorkörner für feuerfeste Formkörper und Verfahren zu ihrer Herstellung**
Refractory grains for refractory articles and process of manufacture thereof
Grains réfractaires pour pièces réfractaires et leur procédé de fabrication

(30) Priorität: 05.04.2001 DE 10117028
(43) Veröffentlichungstag der Anmeldung: 09.10.2002
(60) Teilanmeldung: 08169086.9
(73) Patentinhaber: Refratechnik Holding GmbH, 85737 Ismaning (DE)
(72) Erfinder: Bartha, Peter, Dr., 37120 Bovenden (DE); Klischat, Hans-Jürgen, Dr., 37130 Gleichen (DE); Wirsing, Holger, 37083 Göttingen (DE); Weibel, Guido, 37127 Scheden (DE)
(74) Vertreter: Patentanwälte Dr. Solf & Zapf

(56) Entgegenhaltungen:
- GB-A- 468 765
- US-A- 3 140 955
- US-A- 3 310 414
- US-A- 3 332 740
- US-A- 3 391 011
- ALPHER ET AL.: "High Temperature Oxides" , ACADEMIC PRESS , NEW YORK AND LONDON XP002258751 * Seite 209 - Seite 209 * * Seite 218 - Seite 221 * * Seite 245 - Seite 249 *

## Beschreibung

Die Erfindung betrifft einen Resistor für feuerfeste Formkörper sowie ein Verfahren zur Herstellung des Resistors und Formkörper hieraus.

Als Resistor wird nachfolgend der Träger der Feuerfestigkeit und damit üblicherweise auch die Hauptkomponente eines feuerfesten Formkörpers oder feuerfester Massen bezeichnet. Dieser Resistor kann im allgemeinsten Fall eine metalloxidische, mineralische, feuerfeste Substanz wie MgO, Al₂O₃, Doloma oder ähnliches sein.

Als Elastifizierer werden nachfolgend Minerale bezeichnet, welche aufgrund einer eigenen, relativ hohen Feuerfestigkeit, aber einer zum Resistor unterschiedlichen Temperaturdehnung, durch Mikrorißbildung und weitere Effekte zu einer Erhöhung der Temperaturwechselbeständigkeit einer Mischung aus Resistor und Elastifizierer - im Gegensatz zum reinen Resistor - führen.

Feuerfeste Formkörper, insbesondere basische, feuerfeste Materialien auf der Basis von Magnesia und Doloma werden bei allen Hochtemperaturprozessen mit basischem Schlackenangriff, wie z.B. bei der Zement-, Kalk-, Dolomit-, Eisen- und Stahlerzeugung sowie bei der Nichteisenmetallerzeugung und in der Glasindustrie, als Auskleidungsmaterial für Öfen und Gefäße verwendet. Bei hoher Feuerfestigkeit und guter chemischer Beständigkeit weisen diese Materialien bzw. Formkörper jedoch eine hohe Sprödigkeit, d.h. einen hohen Elastizitätsmodul auf.

Hierbei ist festzustellen, daß Formkörper auf Basis von Schmelzmagnesia deutlich spröder sind als Formkörper auf der Basis von Sintermagnesia. Naturgemäß weist jedoch die Schmelzmagnesia eine deutlich höhere Resistenz gegen thermochemischen Angriff auf als Sintermagnesia. Insofern wäre es wünschenswert, Schmelzmagnesia bzw. Formkörper oder Massen auf Basis von Schmelzmagnesia in Bereichen einzusetzen, in denen ein hoher thermochemischer Angriff, insbesondere ein Angriff dünnflüssiger, basischer Schlakken, stattfindet. Dies ist insbesondere im Drehrohrofen für die Zementerzeugung der Fall. Gerade in Zementdrehrohröfen ist jedoch eine erhebliche mechanische Belastung des feuerfesten Futters vorhanden, so daß bekannte Formkörper auf Basis von Schmelzmagnesia in derartigen Brennaggregaten nicht erfolgreich eingesetzt werden können, da ihre Sprödigkeit die eingetragenen Spannungen, insbesondere Ringspannungen, nicht verkraftet.

Formkörper auf Basis von Schmelzmagnesia sind selbst dann Formkörpern auf Basis von Sintermagnesia in derartigen Brennaggregaten unterlegen, wenn eine Elastifizierung des Formkörpers erfolgt.

Zur Elastifizierung, d.h. zur Verbesserung der Temperaturwechselbeständigkeit (TWB) basischer, feuerfester Materialien wurden in der Vergangenheit zahlreiche Maßnahmen ergriffen. So wird z.B. in Harders/Kienow, Feuerfestkunde, Herstellung, Eigenschaften und Verwendung feuerfester Baustoffe, Springer-Verlag 1960, Kapitel 5.5, Seite 755, vorgeschlagen, basische, feuerfeste Materialien mit Chromerz zu versetzen, wobei insbesondere die Chromerzmenge und die optimale Kornfraktion des Chromerzes definiert wurden. Um eine ausreichende Temperaturwechselbeständigkeit zu erlangen, sind dabei Chromerzmengen zwischen 15 und 30 Gew.-% notwendig. Die elastifizierende, d.h. den E-Modul senkende Wirkung des Chromerzes als Temperaturwechselbeständigkeitskomponente wird von W. Späth in "Zur Temperaturwechselbeständigkeit feuerfester Stoffe", Radex-Rundschau, Jahrgänge 1960-1961, Seite 673-688, Österreichisch-Amerikanische Magnesitaktiengesellschaft, Radenthein/Kärnten, durch Gefügeverspannungen aufgrund unterschiedlicher Wärmedehnungskoeffizienten zwischen Magnesia und Chromerz erklärt. Entscheidende Nachteile der Anwendung von Chromerz als Temperaturwechselbeständigkeitsverbesserer sind jedoch, daß bei einem Wechsel der Ofenatmosphäre Materialermüdungen stattfinden und daß durch Oxidation unter der Wirkung von Alkalien das im Chromerz in dreiwertiger Form vorliegende Chromoxid in toxisches, sechswertiges Chromoxid überführt wird, mit allen damit unter arbeitshygienischen und entsorgungstechnischen Gesichtspunkten verbundenen Problemen.

Es ist ferner aus der AT-PS 158 208 bekannt, Magnesiasteinen zur Verbesserung der Temperaturwechselbeständigkeit Tonerdepulver, Korund- und Aluminiumpulver zuzusetzen, wobei beim Steinbrand in situ Spinell gebildet wird. Der dabei gebildete Aluminium-Magnesium-Spinell ist in der Matrix konzentriert und z.T. nicht ausreagiert, so daß beim Angriff solcher Steine durch Schlacken bevorzugt die für die Festigkeit entscheidende Matrix zerstört wird. Auch ein derartiger Magnesium-Aluminium-Spinell weist gegenüber der reinen Magnesia einen anderen Wärmedehnungskoeffizienten auf, so daß sich hierdurch ebenfalls Gefügeverspannungen und damit Mikrorisse ergeben.

Eine erhebliche Verbesserung sowohl der Temperaturwechselbeständigkeit als auch der chemischen Beständigkeit von Magnesiasteinen konnte erst durch Hinzusetzen von vorsynthetisiertem Magnesium-Aluminium-Spinell in Form von Sinter oder Schmelzspinell erreicht werden, wobei die üblichen Zusatzmengen zwischen 15 und 25 Gew.-% liegen. Der Elastizitätsmodul läßt sich mit dieser Maßnahme auf etwa 20 kN/mm² senken. Nachteile bestehen jedoch nach wie vor dadurch, daß diese Spinellkomponente eine Reaktionsbereitschaft mit Schlacken aufweist und somit ein Verschleiß im Bereich der Spinellmatrix stattfindet, der letztlich auch zu einem beschleunigten Resistorabbau führt.

Aus der DE 35 27 789 A1 ist ein grobkeramischer Formkörper bekannt, welcher ein im wesentlichen homogen im Formkörpergefüge verteiltes Mikrorißsystem aufweist. Dieser Druckschrift liegt dabei die Erkenntnis zugrunde, daß ein geringer E-Modul bei gleichzeitig hoher Resistenz gegen Schlackenangriff dadurch herstellbar ist, daß im Formkörpergefüge homogen ein Mikrorißbildner weit größeren Durchmessers, als im Falle von beispielsweise dichten, oxidkeramischen Hochtemperaturwerkstoffen, verteilt angeordnet wird, wobei der Mechanismus entweder darauf beruht, daß dieser während des Brennprozesses bzw. Steinsinterbrandes eine Expansion der betreffenden Partikel, also eine volumenvergrößernde Reaktion auslöst, wobei in den benachbarten, anderen Partikeln dann das Mikrorißsystem entsteht, oder aber eine starke Schwindung in der Mehlfraktion hervorgerufen wird, die wiederum zu dem beschriebenen Mikrorißsystem in den anderen Partikeln des Gemenges führt. Hierzu werden reine Magnesia und Tonerde in einem, dem Magnesiumaluminatspinell entsprechenden stöchiometrischen Verhältnis gemischt und zu Gemengepartikeln geformt, welche dann dem Grundversatz aus Sintermagnesia zugesetzt werden. Derartige feuerfeste Formkörper haben sich an sich bewährt. Insbesondere beim Einsatz in stark mechanisch beanspruchten Aggregaten mit hohem basischen Schlackenangriff, wie Drehrohröfen der Zementindustrie, kommt es jedoch auch bei derartigen Formkörpern zu schnellem Verschleiß.

Alper et al. beschreibt in "High Temperature Oxides", 1. Januar 1970, Academic Press, New York and London, Seite 209 und Seite 218 bis 221 schmelzgegossene Magnesiumoxid-Spinell-Feuerfestwerkstoffe. Schmelzgegossene Feuerfestprodukte werden hergestellt, indem man die Rohstoffe vermengt, in einem Elektrolichtbogenofen schmilzt und die Schmelze in eine Form aus Graphitplatten gießt und erkalten lässt. Diese sogenannten Ingots werden dann entnommen und können in verschiedenen Größen und Formen gesägt werden.

Die US 3 140 955 A beschreibt Alumina-enthaltende Schmelzmagnesia. Angaben zur Bildung oder Anwesenheit von Spinellen in einem MgO-Resistorkorn können der US 3 140 955 A nicht entnommen werden.

Die US 3 391 011 A offenbart ein Produkt, das aus MgO mit untergeordneten Mengen an Aluminiumoxid und Eisenoxid besteht.

Aus der DE 44 03 869 A1 ist eine feuerfeste, keramische Masse und deren Verwendung bekannt, wobei diese feuerfeste, keramische Masse aus 50 bis 97 Gew.-% MgO-Sinter sowie 3 bis 50 Gew.-% eines Spinells vom Hercynit-Typ bestehen soll. In dieser Druckschrift wird ausgeführt, daß z.B. für die Auskleidung von Industrieöfen, bei denen eine nennenswerte mechanische Beanspruchung der feuerfesten Auskleidung auftritt, Produkte gefordert sein, deren Sprödigkeit so gering wie möglich ist. Zu diesen Öfen würden Drehöfen der Zementindustrie gehören, wo es durch eine Ofendeformation zu einer erheblichen mechanischen Beanspruchung der feuerfesten Auskleidung kommen könne, aber auch Öfen der Stahl- und Nichteisenmetallindustrie würden hierzu gehören, wo insbesondere thermische Spannungen beim Aufheizen und bei Temperaturwechseln zu Problemen führen würden. Gegenüber chromerzhaltigen Steinen wird vorgeschlagen, als Elastifizierer Hercynit bzw. einen hercynitähnlichen Spinell zu verwenden, wobei der hercynitähnliche Spinell innerhalb der folgenden Bereichsgrenzen des ternären Zustandsdiagramms FeO - Al₂O₃ - MgO liegen soll:
- 23 bis 55 Gew.-% FeO
- < 15 Gew.-% MgO
- 54 bis 65 Gew.-% Al₂O₃
- < 3 Gew.-% Verunreinigung

Die unter Verwendung dieses Spinells hergestellten und gebrannten, feuerfesten Steine sollen eine deutlich verbesserte Duktilität aufweisen. Ferner wird in dieser Druckschrift ausgeführt, daß die Sintermagnesia auch durch Schmelzmagnesia ersetzt werden könne. Bei derartigen feuerfesten Produkten ist jedoch von Nachteil, daß die Spinelle vom Hercynit-Typ dazu neigen, MgO aus dem feuerfesten Resistor zu lösen und in sich aufzunehmen. Die Löslichkeitsgrenze des Spinells vom Hercynit-Typ für MgO liegt bei 15 bis 20 %. Umgekehrt ist das MgO in der Lage, Teile des Hercynit-Spinells bzw. der ihn ausbildenden Oxide FeO und Al₂O₃ in sich aufzunehmen. Es wurde deshalb bei derartigen feuerfesten Formkörpern eine unerwünscht Gefügeschwächung durch Diffusionsvorgänge und gegenseitiges Anlösen der Bestandteile beobachtet, wobei ein deutliches Diffusionsgefälle in Richtung von MgO zum Spinell wegen der höheren Diffusionsgeschwindigkeit des Mg²⁺ besteht (W. Schulle, Feuerfeste Werkstoffe, Deutscher Verlag für Grundstoffindustrie, 1990, S. 254). Ferner ist von Nachteil, daß bei der Verwendung von Schmelzmagnesia der elastifizierende Anteil des Spinells nicht hoch genug ist, um diesen Resistor für Drehrohröfen bei ausreichend hoher thermochemischer Beständigkeit geeignet zu machen.

Aufgabe der Erfindung ist es, einen feuerfesten Resistor zu schaffen, der bei einer sehr hohen thermochemischen Beständigkeit eine ausreichende Duktilität auch für den Einsatz in mechanisch hoch beanspruchten Aggregaten aufweist.

Die Aufgabe wird mit einem feuerfesten Resistor mit den Merkmalen des Anspruch 1 gelöst.

Es ist ferner eine Aufgabe, ein Verfahren zur Herstellung des Resistors sowie eines feuerfesten Formkörpers hieraus zu schaffen.

Diese Aufgabe wird mit den Merkmalen des Anspruchs 14 gelöst. Vorteilhafte Ausgestaltungen sind in den jeweils abhängigen Unteransprüchen angegeben.

Erfindungsgemäß wird eine Schmelzmagnesia bzw. generell ein erschmolzener und damit an sich spröder Resistor derart konditioniert, daß er eine erhöhte Duktilität bzw. höhere Elastizität aufweist, so daß dieser Resistor bei hoher thermochemischer Beständigkeit auch in mechanisch hoch belasteten Aggregaten wie Drehrohröfen eingesetzt werden kann. Dies wird erfindungsgemäß dadurch erreicht, daß dem Resistor während des Schmelzvorganges Spinellbildner derart zugesetzt werden, daß die nach dem Schmelzen entstandenen Resistorkörner Ausscheidungen bzw. Ausscheidungsfelder aufweisen, in denen Spinell konzentriert ist. Hierbei wird die Zugabe von Spinellbildnern derart dosiert, daß die Löslichkeit des Resistors für diesen Spinellbildner überschritten wird, wobei durch die exakte Zudosierung des Spinellbildners somit die Anzahl und überraschenderweise auch die Größe der Ausscheidungsfelder bestimmbar ist.

Es ist ferner überraschend, daß eine ausreichende Elastifizierung des erschmolzenen Resistors möglich ist, obwohl zwischen den einzelnen, während des Sinterbrandes miteinander verbundenen Schmelzmagnesia oder Schmelzresistorkörnern hiermit kein sichtbares Mikrorißsystem erzeugt wird.

Von Vorteil bei einem derart konditionierten Resistor ist ferner, daß der Elastifizierer, welcher bezüglich der chemischen Resistenz den Schwachpunkt des Steines darstellt, vom chemisch resistenteren Resistor gegen die Schlacken abgeschirmt wird. Hierbei können mit den erfindungsgemäßen Zugabemengen von Spinellbildnern sogar derart hohe Elastifizierungsleistungen erzielt werden, daß der Resistor soweit konditioniert ist, daß er neben seinem "internen" Elastifizierer (Ausscheidungsfelder) keine weiteren externen Elastifiziererzugaben im Versatz benötigt.

Selbstverständlich ist es dennoch möglich, weitere Elastifizierer (externe Elastifizierer) zuzugeben.

Es hat sich herausgestellt, daß es von besonderem Vorteil ist, als externen Elastifizierer einen Spinell zu verwenden, wie er auch als interner Elastifizierer Anwendung findet. Dies wird darauf zurückgeführt, daß der Resistor durch die Eigenelastifizierung derart weit mit dem Spinell abgesättigt ist, daß eine Diffusionshemmung bzw. -verminderung hierdurch erzeugt wird. Die Einflüsse durch Diffusion, beispielsweise eines reinen Hercynit, auf den Resistor werden hierdurch unterbunden.

Bei dem erfindungsgemäßen Hauptanwendungsgebiet, nämlich der Schmelzmagnesia, werden bevorzugt FeO und Al₂O₃ bzw. Fe₂O₃ und Al₂O₃ zugesetzt, so daß die Ausscheidungsfelder im wesentlichen aus einem Pleonastspinell bzw. einem Spinell vom Pleonast-Typ ausgebildet werden. Es hat sich herausgestellt, daß dieser Elastifizierer vom Pleonast-Typ sowohl intern als auch extern über eine erheblich verbesserte Verträglichkeit mit dem Resistor verfügt, wobei eine ausreichende Elastifizierung gewährleistet ist. Ferner weist dieser Elastifizierer gegenüber bekannten Elastifizierern eine erhöhte thermochemische Beständigkeit auf.

Die Erfindung wird im folgenden anhand einer Zeichnung beispielhaft erläutert. Es zeigt hierbei
- Fig. 1: ein erfindungsgemäßes Schmelzkorn aus MgO mit pleonastischen, punktförmigen Entmischungen im Korn sowie an den Korngrenzen;
- Fig. 2: eine weitere Aufnahme eines erfindungsgemäßen Schmelzkorns aus MgO mit punktförmigen Aluminium-Spinell-Entmischungen im Korn sowie an den Korngrenzen.
- Fig. 3: den Zusammensetzungsbereich eines erfindungsgemäß konditionierten Resistors auf Basis Periklas im ternären System FeOₓ-Al₂O₃-MgO,
- Fig. 4: den Verfahrensstammbaum der Herstellung des erfindungsgemäßen Resistors und Formkörper hieraus.

Erfindungsgemäß weist ein Resistor, d.h. der Träger der Feuerfestigkeit eines feuerfesten Gemenges, üblicherweise eine metalloxidische, mineralische, körnige Komponente Entmischungsfelder von Spinell auf. Insbesondere wird erfindungsgemäß ein Resistor auf Basis MgO gewählt, wobei dieser Resistor aus einem dotierten Magnesiumoxid besteht, welches Entmischungen von Spinell enthält. Der Spinell selbst kann eine Zusammensetzung entsprechend (Fe, Mg)²⁺ ( Al)³⁺₂ O₄ haben. Die Menge dieser Spinellentmischungen in der Magnesia bzw. dem feuerfesten Resistor können zwischen 2 und 25 M-% liegen. Vorteilhafterweise wird diese Spinellentmischung bei erschmolzenem Magnesiumoxid, der sog. Schmelzmagnesia, verwendet.

Im erfindungsgemäßen Formkörper ist eine Korrosion weniger möglich, da der Spinell im MgO-Korn eingebunden ist und das Gefüge hierdurch seine Elastizität auf Dauer behält. Im Gegensatz hierzu verbleibt im Stand der Technik nach dem Verschleiß des Elastifizierers ein Gerüst aus einem spröden Material, welches, nachdem der Elastifizierer verschlissen ist, beschleunigt weiter verschleissen kann. Auch eine lokale Anreicherung an Korrosionsprodukten, wie sie bei Formkörpern vorkommt, in denen die Elastifizierer in körniger bzw. lokal stark angereicherter Form vorliegen, wird vermieden.

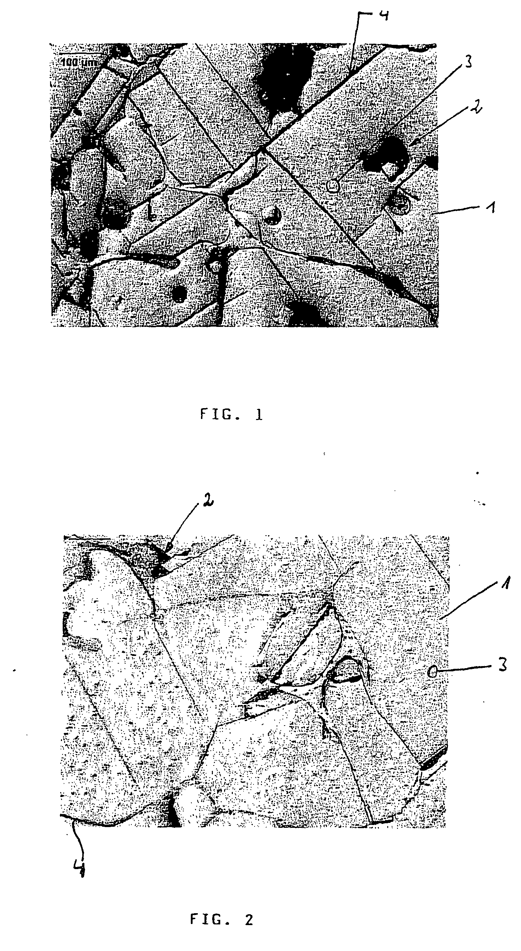

Wie die beiden Abbildungen gemäß Fig. 1 und Fig. 2 zeigen, sind die Spinellentmischungen punktförmig im gesamten Schmelzkorn relativ gleichmäßig verteilt, wobei selbstverständlich auch in den Korngrenzenbereichen Spinellentmischungen vorhanden sind. Sollten diese korrodiert werden, stellen sie jedoch nur einen geringen Anteil der tatsächlich vorhandenen Spinellentmischungen dar, so daß auch die elastifizierende Wirkung der Spinellentmischungen nur minimal beeinträchtigt wird. Es ist deshalb möglich, mit einem Formkörper, der die erfindungsgemäß elastifizierte Schmelzmagnesia enthält, thermomechanisch sensible Aggregate zuzustellen, wobei gegenüber dem bisherigen Stand der Technik eine verringerte thermomechanische Empfindlichkeit besteht, da bereits das Korn eine verbesserte Elastizität und Plastizität aufweist und auch die Korrosionsbeständigkeit verbessert ist. Diese Effekte lassen sich zum einen über den Elastizitätsmodul, als Maß für die Elastizität, sowie zum anderen über Dₘₐₓ aus der Messung des Druckerweichens nach DIN 51053 (mit einer mechanischen Belastung von 0,2 N/mm²), als Maß für die Ringspannung bzw. die plastische Verformung, nachweisen, da sich bei hohem Dₘₐₓ auch höhere Spannungen aufbauen, die zu einer Abplatzung von Steinschichten und damit zu einer vorzeitigen Zerstörung der feuerfesten Ausmauerung führen. Bei einem niedrigen Dₘₐₓ können sich aufgrund plastischer Vorgänge die mechanischen Spannungen bereits zerstörungsfrei abbauen.

In den Abbildungen gemäß Fig. 1 und Fig. 2 sind die großen, weißen Felder 1 Periklaskristalle, welche im Bereich der angedeuteten Risse bzw. Korngrenzen 4 aneinanderstoßen. In den Periklaskristallen sind die punktförmigen Spinellentmischungen 3 zu erkennen, wobei Lunker bzw. Poren 2 vorhanden sind. Die punktförmigen Entmischungen 3 in Fig. 1 sind pleonastische Spinelle, während die punktförmigen Entmischungen 3 in Fig. 2 Magnesium-Aluminiumspinelle sind.

Grundsätzlich kann eine derart konditionierte Schmelzmagnesia auch zusammen mit herkömmlicher Sintermagnesia verwendet werden, wenn dies aus bestimmten Gründen, beispielsweise Kostengründen, gewünscht ist.

Als Ausgangsstoffe werden insbesondere kaustische Magnesia, Magnesiumhydroxid und Magnesit verwendet, wobei zur Ausbildung der Spinellentmischungen Aluminiumoxid, beispielsweise in Form von Tabulartonerde, und Eisenoxid, beispielsweise in Form von Magnetit, zugegeben werden.

Selbstverständlich kann zur Bildung von Spinellentmischungen auch lediglich Aluminiumoxid zur Ausbildung von Aluminium-Magnesium-Spinell zugegeben werden. Weiterhin ist es selbstverständlich möglich alle spinellbildenden Minerale entsprechend einer stöchiometrisch erforderlichen Menge als Spinellbildner zuzugeben, d.h. die entsprechenden Oxide der Elemente Eisen, Magnesium, Mangan und Aluminium oder weiterer möglicher Spinellbildner.

Bei einer Schmelzmagnesia können somit beispielsweise die entsprechenden Oxide des Eisens des Mangangs und des Aluminiums zugegeben werden. Bei einem Resistor auf Basis Al₂O₃ würden entsprechend die Oxide des Eisens, Mangans und Magnesiums zugegeben werden können.

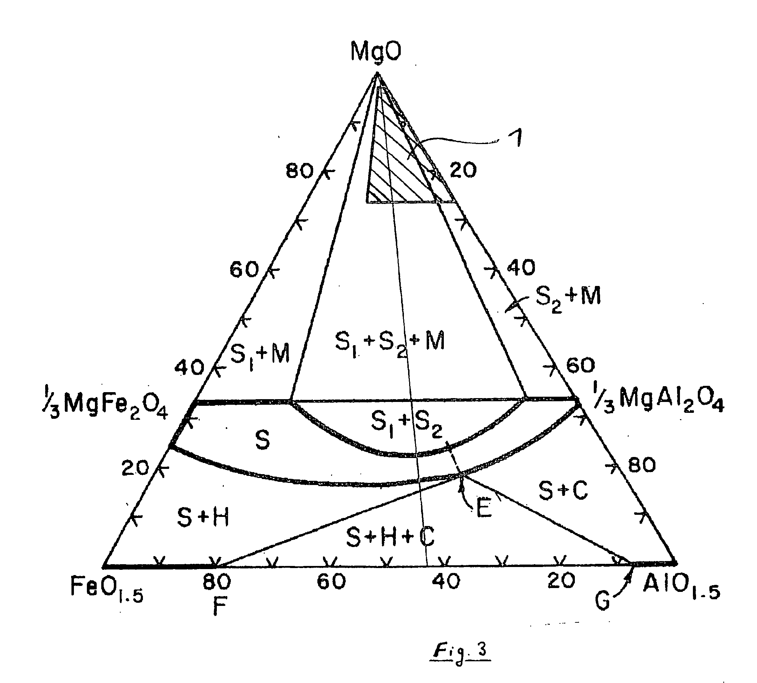

In Fig. 3 wird beispielhaft das Feld eines eigenelastifizierten Periklases gemäß der Erfindung mit einem schraffierten Feld 1 dargestellt.

Im folgenden wird die Erfindung anhand von Ausführungsbeispielen erläutert.

### Beispiel 1:

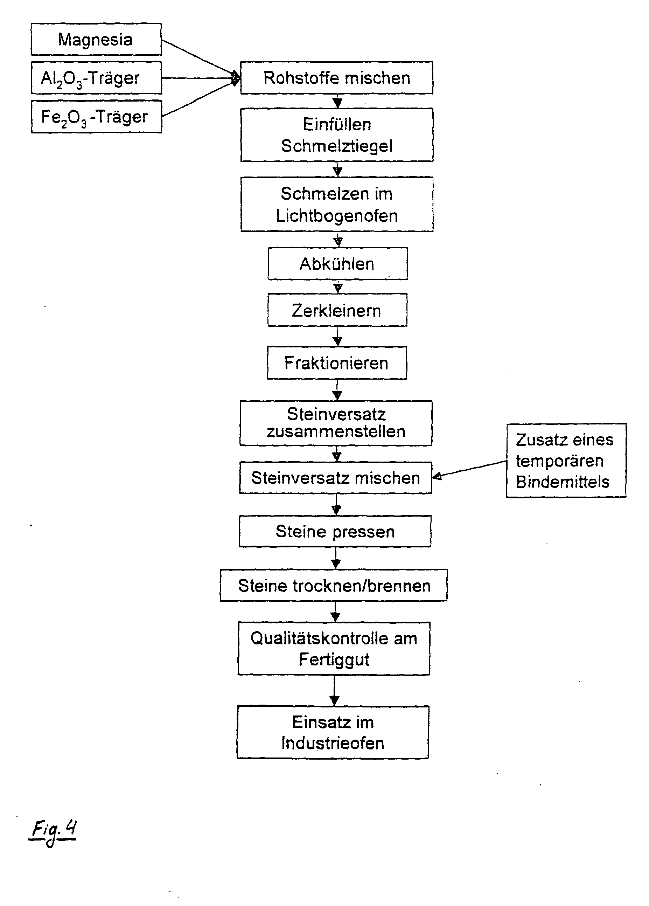

90 % einer kaustischen Magnesia, 4,4 % Eisenoxid und 5,6 % Aluminiumoxid werden in einem Elektrolichtbogenofen bei einer Temperatur von ca. 3.000 °C erschmolzen (Fig. 4). Nach dem Schmelzprozeß und dem nachfolgenden Abkühlen wird das erschmolzene Produkt in Fraktionen von 0 bis 1 mm, 1 bis 2 mm, 2 bis 4 mm und Mehl aufbereitet. Die Versatzzusammenstellung zur Herstellung des feuerfesten Formkörpers erfolgt entsprechend einer typischen Fullerkurve. Die durch die Zusammenstellung der Fraktionen erzielte Körnung wird mit einer erforderlichen Menge an Ligninsulfonat versetzt und mit einem spezifischen Preßdruck von 130 MPa zu Formkörpern gepreßt. Nach einer Trocknung wird der Stein bei einer Sintertemperatur von ca. 1.600 °C gebrannt. Zum Vergleich wird der gleiche Versatz mit einer Magnesia hergestellt, die ebenfalls erschmolzen ist, die jedoch kein zusätzliches Eisenoxid und kein zusätzliches Aluminiumoxid enthält. An diesem Stein wird nach dem Steinbrand die elastische Eigenschaft sowie die thermisch-mechanische Größe Dₘₐₓ gemessen, um eine Aussage über das elastische und plastische Verhalten treffen zu können.

Die erreichten Eigenschaften sind in der nachfolgenden Tabelle aufgeführt:

**Tabelle 1**

| | Magnesiastein | Magnesiastein mit Pleonastentmischungen |
|---|---|---|
| Rohdichte / g/cm³ | 3,03 | 3,03 |
| Porosität / % | 15,12 | 15,05 |
| E-Modul / GPa | 98,3 | 34,5 |
| G-Modul / GPa | 43,2 | 16,8 |
| Kaltdruckfestigkeit / MPa | 91,3 | 88,8 |
| TWB nach DIN 51068 | 4 | > 20 |
| DE : Dₘₐₓ / % nach DIN 51053 | 2,11 | 1,68 |

Dieser Tabelle kann man entnehmen, daß die Werte der elastischen Eigenschaften eines Magnesiasteins, der aus einem Resistor mit Pleonastentmischungen ausgebildet ist, weit unter den typischen Werten von reinen Magnesiasteinen liegt. Gleichzeitig wird aufgrund des plastischen, rißfreien Spannungsabbaus der Dₘₐₓ-Wert überraschenderweise um mehr als 20 % gesenkt, wodurch auch die mechanischen Spannungen, die sich in einem ringförmigen Aggregat oder bei Einspannung der Ausmauerung in einen mechanischen Rahmen, etwa im Falle eines stationären Ofens, bilden, ebenfalls signifikant sinken.

### Beispiel 2:

85 % Magnesia und 15 % Aluminiumoxid werden in einem Elektrolichtbogenofen bei einer Temperatur von ca. 3.000 °C erschmolzen (Fig. 4). Das Schmelzprodukt enthält Entmischungen von Magnesium-Aluminium-Spinell, wie sie in Fig. 2 dargestellt sind. Dieses Material wird nach dem Schmelzprozeß in Fraktionen 0 bis 1 mm, 1 bis 2 mm, 2 bis 4 mm und Mehl aufbereitet. Die Versatzzusammenstellung zur Herstellung eines feuerfesten Formkörpers erfolgt entsprechend einer typischen Fullerkurve. Die aus den einzelnen Fraktionen entsprechend der Fullerkurve zusammengestellte Körnung wird mit einer an sich üblichen und erforderlichen Menge an Ligninsulfonat als temporären Binder versetzt und mit einem spezifischen Preßdruck von 130 MPa verpreßt. Nach einer Trockung wird der Formkörper bei einer Sintertemperatur von 1.600 °C gebrannt. Zum Vergleich wird ein Formkörper aus reiner Magnesia, wie in Beispiel 1, herangezogen. Die Meßgrößen entsprechen denen des Beispiels 1. Die erreichten Eigenschaften sind in der nachfolgenden Tabelle aufgeführt:

**Tabelle 2**

| | Magnesiastein | Magnesiastein mit Pleonastentmischungen |
|---|---|---|
| Rohdichte / g/cm³ | 3,03 | 2,99 |
| Porosität / % | 15,12 | 15,23 |
| E-Modul / GPa | 98,3 | 16,7 |
| G-Modul / GPa | 43,2 | 7,5 |
| Kaltdruckfestigkeit / MPa | 91,3 | 79,3 |
| TWB nach DIN 51068 | 4 | > 20 |
| DE : Dₘₐₓ / % nach DIN 51053 | 2,11 | 1,66 |

Auch aus dieser Tabelle ergibt sich, daß die Werte der elastischen Eigenschaften des Spinellentmischungen aufweisenden Resistors weit unter den typischen Werten von reinen Magnesiasteinen liegen. Gleichzeitig wird aufgrund des plastischen, rißfreien Spannungsabbaus der Dₘₐₓ-Wert ebenfalls um mehr als 20 % gesenkt, wodurch auch die mechanischen Spannungen in feuerfesten Mauerwerken eines Industrieofens signifikant sinken.

Erfindungsgemäß hergestellt Formkörper lassen sich überall dort einsetzen, wo starke mechanische und thermomechanische Spannungen auftreten. Gegenüber bislang bekannten Formkörpern mit dem von Natur aus spröden MgO-Korn, insbesondere Schmelzkorn, weist der erfindungsgemäße Resistor eine erhöhte Plastizität und Elastizität auf. Hierbei ist von Vorteil, daß die Elastizität und die Plastizität in erfindungsgemäß hergestellten Resistoren im Korn selbst erzeugt wird.

Selbstverständlich schließt die Verwendung des erfindungsgemäß hergestellten Resistors eine Anwendung in feuerfesten Formkörpern, die weitere Elastifizierer wie Spinell, Hercynit, Zirkoniumoxid oder Chromerz enthalten nicht aus. Hier können sich die positiven Wirkungen der eigenelastifizierten Resistoren sowie der zugesetzten Elastifizierer addieren, wodurch sich eine weitere verbesserte Elastizität und Hochtemperatur-Plastizität ergibt. Dies ist der folgenden Tabelle zu entnehmen:

**Tabelle 3**

| | Magnesiastein | Magnesiastein mit Spinellentmischungen | Magnesiastein mit Pleonastentmischungen und 15 % Spinell |
|---|---|---|---|
| Rohdichte / g/cm³ | 3,03 | 2,99 | 2,99 |
| Porosität / % | 15,12 | 15,23 | 15,31 |
| E-Modul / GPa | 98,3 | 16,7 | 15,6 |
| G-Modul / GPa | 43,2 | 7,5 | 7,2 |
| Kaltdruckfestigkeit / MPa | 91,3 | 79,3 | 61,8 |
| TWB nach DIN 51068 | 4 | > 20 | > 30 |
| DE : Dₘₐₓ / % nach DIN 51053 | 2,11 | 1,66 | 1,65 |

Darüber hinaus ist es selbstverständlich auch möglich, erfindungsgemäß hergestellt Resistoren zusammen mit anderen üblichen Resistoren in feuerfesten Massen oder Formkörpern zu verwenden.

## Patentansprüche

1. Aus einer erstarrten Schmelze zerkleinerte und fraktionierte Resistorkörner aus Schmelzmagnesia als feuerfeste MgO-Hauptkomponente zur Herstellung feuerfester Produkte, insbesondere für die Herstellung feuerfester Formkörper, wobei die Resistorkörner Kristalle der feuerfesten mineralischen metalloxidischen Hauptkomponente aufweisen und wobei Spinellausscheidungen eines Elastifizierers der allgemeinen Formel A²⁺B³⁺₂O₄ in den Kristallen und an den Korngrenzen der Kristalle aus den Elementen A²⁺ Fe, Mg und B³⁺ = Al gebildet sind, und wobei die Resistorkörner 2 bis 25 Massenprozent des Elastifizierers enthalten.

2. Resistorkörner nach Anspruch 1,
**dadurch gekennzeichnet, dass** die Hauptkomponente Periklas ist.

3. Resistorkörner nach Anspruche 1 oder 2,
**dadurch gekennzeichnet, dass** der Elastifizierer ein pleonastischer Spinell der allgemeinen Formel (Fe, Mg) Al₂O₄ ist.

4. Resistorkörner nach Anspruch 1 oder 2,
**dadurch gekennzeichnet, dass** der Elastifizierer MgAl-Spinell ist.

5. Verfahren zur Herstellung von Resistorkörnern nach einem oder mehreren der Ansprüche 1 bis 4,
**gekennzeichnet durch** die folgenden Verfahrensschritte:
(a) gemeinsames Schmelzen einer Mischung aus einer feuerfesten metalloxidischen MgO-Hauptkomponente oder einem üblichen Ausgangsstoff der Hauptkomponente und einen Spinell der Formel A²⁺B³⁺₂O₄ aus den Elementen A²⁺ = Fe, Mg und B³⁺ = A1 bildenden Oxiden oder einem üblichen Ausgangsstoff der Oxide, wobei die Mischung den Spinellbildner in einer Menge dosiert zugesetzt enthält, dass seine Löslichkeit in der Schmelze überschritten wird und beim Abkühlen der Schmelze Entmischungsfelder von elastifizierenden Spinellen der genannten Formel A²⁺B³⁺₂O₄ punktförmig und relativ gleichmäßig verteilt in den Resistorkörnern ausgebildet werden,
(b) Zerkleinern und Fraktionieren des Schmelzprodukts.

6. Verfahren nach Anspruch 5,
**dadurch gekennzeichnet,**
**dass** als spinellbildende Minerale Oxide der Elemente Fe, Mg, und Al verwendet werden.

7. Verfahren mach einem der Ansprüche 5 oder 6,
**dadurch gekennzeichnet,**
**dass** als Spinellbildner Metalloxide verwendet werden, die in den Resistor können einen mit MgO gesättigten pleonastischen Spinell der allgemeinen Formel (Fe,Mg)(Al)₂O₃ bilden.

## Claims

1. Resistor grains which are comminuted from a solidified melt and fractionated and are formed from fused magnesia as main refractory MgO component for the production of refractory products, in particular for the production of refractory shaped bodies, wherein the resistor grains include crystals of the main refractory mineral metal oxide component, and wherein spinel precipitations of an elasticizer of the general formula A²⁺B³⁺₂O₄ are formed in the crystals and at the grain boundaries of the crystals from the elements A²⁺ = Fe, Mg and B³⁺ = A1, and wherein the resistor grains contain 2 to 25 percent by mass of the elasticizer.

2. Resistor grains according to Claim 1, **characterized in that** the main component is periclase.

3. Resistor grains according to Claim 1 or 2, **characterized in that** the elasticizer is a pleonastic spinel of the general formula (Fe, Mg)Al₂O₄.

4. Resistor grains according to Claim 1 or 2, **characterized in that** the elasticizer is MgAl spinel.

5. Process for producing resistor grains according to one or more of Claims 1 to 4,
**characterized by** the following process steps:
(a) co-melting of a mixture of a refractory, metal oxide MgO main component or a standard precursor of the main component and oxides forming a spinel of the formula A²⁺B³⁺₂O₄ from the elements A²⁺ = Fe, Mg and B³⁺ = Al or a standard precursor of the oxides, wherein the mixture contains the spinel former metered in in a quantity which is such that its solubility in the melt is exceeded and, during cooling of the melt, segregation areas of elasticizing spinels of said formula A²⁺B³⁺₂O₄ are formed in a punctiform and relatively uniform distribution in the resistor grains,
(b) comminuting and fractionating the melt product.

6. Process according to Claim 5, **characterized in that** oxides of the elements Fe, Mg, and Al are used as spinel-forming minerals.

7. Process according to either of Claims 5 and 6, **characterized in that** metal oxides which, in the resistor grains, form an MgO-saturated pleonastic spinel of the general formula (Fe, Mg)(Al)₂O₃ are used as spinel-forming agents.

## Revendications

1. Grains réfractaires en magnésie fondue fragmentés et fractionnés à partir d'une masse fondue et solidifiée, de composant principal MgO réfractaire, pour la fabrication de produits réfractaires, en particulier pour la fabrication de corps moulés réfractaires, les grains réfractaires comportant des cristaux du composant minéral réfractaire principal en oxydes métalliques, et des précipités de spinelle d'un élastifiant de la formule générale A²⁺B³⁺₂O₄, étant formés dans les cristaux et aux limites de grains des cristaux en les éléments A²⁺ = Fe, Mg et B³⁺ = Al, et les grains réfractaires contenant 2 à 25 % en masse de l'élastifiant.

2. Grains réfractaires selon la revendication 1, **caractérisés en ce que** le composant principal est de la périclase.

3. Grains réfractaires selon la revendication 1 ou 2, **caractérisés en ce que** l'élastifiant est une spinelle pléonastique de la formule générale (Fe, Mg)Al₂O₄.

4. Grains réfractaires selon la revendication 1 ou 2, **caractérisés en ce que** l'élastifiant est une spinelle MgAl.

5. Procédé de fabrication de grains réfractaires selon l'une quelconque ou plusieurs des revendications 1 à 4, **caractérisé par** les étapes de procédé suivantes :
a) fusion commune d'un mélange en un composant MgO réfractaire principal en oxydes métalliques ou en une substance de départ habituelle du composant principal, et en une spinelle de la formule générale A²⁺B³⁺₂O₄, en les éléments formant des oxydes A²⁺ = Fe, Mg et B³⁺ = Al ou en une substance de départ habituelle des oxydes, le mélange contenant le précurseur de spinelle en une quantité, ajoutée par dosage, telle que sa solubilité dans la matière fondue est dépassée et que, lors du refroidissement de la matière fondue, des zones de démélange des spinelles élastifiantes de ladite formule générale A²⁺B³⁺₂O₄ sont formées ponctuellement et réparties de façon relativement uniforme dans les grains réfractaires,
b) fragmentation et fractionnement du produit de fusion.

6. Procédé selon la revendication 5, **caractérisé en ce que**, comme minéraux précurseurs de spinelle, sont utilisés des oxydes des éléments Fe, Mg et Al.

7. Procédé selon l'une quelconque des revendications 5 ou 6, **caractérisé en ce que**, comme précurseurs de spinelle, sont utilisés des oxydes métalliques qui forment dans les grains réfractaires une spinelle pléonastique saturée en MgO de la formule générale (Fe, Mg)(Al)₂O₃.
